# EUROPÄISCHE PATENTANMELDUNG

(11) **EP 4 528 041 A1**
(43) Veröffentlichungstag der Anmeldung: **26.03.2025**
(21) Anmeldenummer: 23199064.9
(22) Anmeldetag: 22.09.2023
(51) Int. Cl.: E03F 5/14, B01D 21/00, C02F 11/121

(54) **SCHLAMMWASSERABZUG UND VERFAHREN ZUR STEUERUNG EINES DERARTIGEN SCHLAMMWASSERABZUGS**

(71) Anmelder: H2Ortner GmbH, 94036 Passau (DE)
(72) Erfinder: ORTNER, Josef, 94036 Passau (DE); WILHELM, Joachim, 63110 Rodgau (DE)
(74) Vertreter: advotec.

(57) **Zusammenfassung**

Die Erfindung betrifft einen Schlammwasserabzug, umfassend ein Spaltsiebrohr zur Gewinnung von Schlammwasser aus Schlamm, eine Pumpe und einen Abflussschlauch, wobei mittels der Pumpe gewonnenes Schlammwasser durch den Abflussschlauch förderbar ist.

## Beschreibung

Die vorliegende Erfindung betrifft einen Schlammwasserabzug für Schlammeindickbecken, Schlammstapelbecken, Regenrücklaufbecken bzw. Regenrückhaltebecken und Entlastungsbecken.

Aus dem Stand der Technik sind Schlammwasserabzüge für Schlammeindickbecken und Schlammstapelbecken bekannt. Diese sind regelmäßig Bestandteil einer Kläranlage. Schlamm aus einem Reinigungsprozess wird hierbei in die Becken befördert. In den Becken setzt sich der Feststoff ab, wodurch eine Schicht mit Schlammwasser entsteht. Die Schlammwasser-Schicht ist teilweise jedoch nicht an der Oberfläche angeordnet, sondern beispielsweise von einer Schwimmschlammdecke bedeckt. Mithin ist die Schlammwasser-Schicht von außen nicht sichtbar.

Zum Entfernen des Schlammwassers aus dem Becken umfassen die bekannten Schlammwasserabzüge daher höhenverstellbare Abzugsgalgen oder höhenverstellbare Pumpen.

Die Höhenverstellung des Abzugsgalgens bzw. der Pumpe hat jedoch Schlammmitrisse und somit eine hohe Feststoffbelastung des extrahierten Schlammwassers zur Folge. Zudem bedarf es einer manuellen Suche der Schlammwasser-Schicht, welche eine Probenentnahme umfasst. Dies ist arbeits- und zeitintensiv.

Aufgabe der vorliegenden Erfindung ist es, einen Schlammwasserabzug bereitzustellen, welcher einen automatisierten Abzug von Schlammwasser mit geringer Feststoffbelastung ermöglicht. Ferner ist es Aufgabe der vorliegenden Erfindung, ein Verfahren zur Steuerung eines derartigen Schlammwasserabzugs bereitzustellen.

Diese Aufgabe ist erfindungsgemäß durch den Schlammwasserabzug mit den Merkmalen des Patentanspruchs 1 und das Verfahren zur Steuerung eines derartigen Schlammwasserabzuges mit den Merkmalen des Patentanspruchs 14 gelöst.

Erfindungsgemäß wird also ein Schlammwasserabzug für Schlammeindickbecken, Schlammstapelbecken, Regenrücklaufbecken bzw. Regenrückhaltebecken und Entlastungsbecken (im Folgenden als "Becken" bezeichnet) bereitgestellt, welcher ein insbesondere drehbares, Spaltsiebrohr zur Gewinnung von Schlammwasser aus Schlamm und eine Pumpe zur Förderung des Schlammwassers, insbesondere eines Trübwassers, eines Zentrats, eines Filtrats oder eines Presswassers, umfasst. Mittels des Spaltsiebrohres ist das gewonnene Schlammwasser durch einen Abflussschlauch förderbar.

Durch die Verwendung des Spaltsiebrohrs ist somit über die gesamte Höhe des Beckens ein Schlammwasserablauf bzw. eine Schlammwassergewinnung möglich, wobei in Bereichen mit hohem Feststoffanteil Spalte des Spaltsiebrohrs durch den Schlamm verschlossen werden, so dass lediglich das Schlammwasser mit geringem Feststoffanteil durch die Spalte in das Innere des Spaltsiebrohrs fließt. Hierdurch entfällt eine aufwendige manuelle Suche der Schlammwasserschicht. Mittels der Pumpe ist das gewonnene Schlammwasser anschließend an einer beliebigen Stelle, insbesondere in vertikaler Richtung nach oben, also gegen die Gravitationskraft, förderbar. Mithin bedarf es zur Ableitung des Schlammwassers keiner zusätzlicher Bohrung bzw. Öffnung in dem Becken, in welcher der Schlammwasserabzug angeordnet ist.

Der Abflussschlauch kann ein Schlauch, ein Rohr oder eine Leitung sein.

Der Abflussschlauch ist beispielsweise flexibel oder starr.

Bei einer bevorzugten Ausführungsform des Schlammwasserabzugs nach der Erfindung umfasst die Pumpe eine Ansaugöffnung, durch welche mittels des Spaltsiebrohres gewonnenes Schlammwasser in die Pumpe einsaugbar ist.

Die Pumpe kann eine Auslassöffnung aufweisen.

Die Auslassöffnung ist beispielsweise mit dem Abflussschlauch derart verbunden, dass das Schlammwasser durch den Abflussschlauch, insbesondere in vertikaler Richtung nach oben, förderbar ist.

Eine Länge des Spaltsiebrohrs kann einer Höhe eines Beckens, in welchem der Schlammwasserabzug anordenbar ist, oder einer maximalen Füllhöhe des Schlammes in dem Becken entsprechen.

Das Spaltsiebrohr ist beispielsweise ein Hohlzylinder.

Die Spalte des Spaltsiebrohres weisen beispielsweise eine sich nach innen, also zu einer Spaltsiebrohr-Längsmittelachse hin, verjüngende Form auf.

Bei einer bevorzugten Ausführungsform umfasst der Schlammwasserabzug nach der Erfindung eine Reinigungsbürste zur Reinigung des Spaltsiebrohrs.

Die Reinigungsbürste liegt beispielsweise an einer Außenseite dem Spaltsiebrohr, insbesondere der Außenfläche bzw. Mantelfläche des Spaltsiebrohres, insbesondere kontinuierlich, derart an, dass die Außenfläche des Spaltsiebrohrs durch Rotation des Spaltsiebrohrs um eine Spaltsiebrohr-Längsmittelachse von den Feststoffen des Schlamms gereinigt wird.

Bei einer bevorzugten Ausführungsform des Schlammwasserabzugs nach der Erfindung erstreckt sich der Abflussschlauch zumindest teilweise, insbesondere zum Großteil, vertikal, insbesondere parallel zu dem Spaltsiebrohr.

Der Abflussschlauch ist beispielsweise mindestens so lang wie das Spaltsiebrohr.

Der Abflussschlauch kann eine derartige Länge aufweisen, dass dieser oben aus einem Becken herausragt, in welchem der Schlammwasserabzug anordenbar ist. Somit ist gewonnenes Schlammwasser oberhalb eines Schlammspiegels, also über einen in dem Becken beinhalteten Schlamm, förderbar.

Bei einer beispielhaften Ausführungsform des Schlammwasserabzugs nach der Erfindung ist die Pumpe durch das Spaltsiebrohr hindurchführbar. Der Durchmesser des Spaltsiebrohrs ist also größer als die Erstreckung der Pumpe in Querrichtung. Somit ist die Pumpe auf einfache Weise montierbar, wartbar und/oder austauschbar.

Bei einer bevorzugten Ausführungsform des Schlammwasserabzugs nach der Erfindung ist die Ansaugöffnung direkt mit dem Spaltsiebrohr verbunden. Eine die Ansaugöffnung definierende Wand der Pumpe schließt also direkt an das Spaltsiebrohr an, so dass das Schlammwasser aus dem Spaltsiebrohr in die Pumpe gelangt.

Bei einer bevorzugten Ausführungsform umfasst der Schlammwasserabzug nach der Erfindung ein Abflussrohr, durch welches sich der Abflussschlauch erstreckt.

Das Abflussrohr ist beispielsweise ein endseitig geöffneter Hohlzylinder.

Das geschlossene Ende des Hohlzylinders ist beispielsweise in vertikaler Richtung unten angeordnet.

Bei einer bevorzugten Ausführungsform des Schlammwasserabzugs nach der Erfindung weist das Abflussrohr mindestens eine dem Spaltsiebrohr entsprechende Länge auf.

Das Abflussrohr kann sich parallel zu dem Spaltsiebrohr erstrecken.

Das Abflussrohr erstreckt sich beispielsweise vertikal.

Das Abflussrohr kann einen derartigen Durchmesser aufweisen, dass die Pumpe durch das Abflussrohr hindurchführbar ist.

Bei einer bevorzugten Ausführungsform des Schlammwasserabzugs nach der Erfindung erstreckt sich der Abflussschlauch durch das Spaltsiebrohr bzw. ist in dem Spaltsiebrohr angeordnet.

Bei einer beispielhaften Ausführungsform umfasst der Schlammwasserabzug nach der Erfindung ein, insbesondere geschlossenes, Auffangbehältnis zur Aufnahme des mittels des Spaltsiebrohrs gewonnenen Schlammwassers.

Eine Länge des Spaltsiebrohrs und eine Höhe des Auffangbehältnisses, also die vertikale Erstreckung des Spaltsiebrohres und des Auffangbehältnisses, können in Summe einer Höhe eines Beckens oder einer maximalen Füllhöhe des Schlammes entsprechen, in welchem der Schlammwasserabzug anordenbar ist.

In dem Auffangbehältnis kann die Pumpe angeordnet sein.

Das Auffangbehältnis umfasst beispielsweise an seiner Oberseite genau eine Öffnung.

Durch die Öffnung kann in dem Inneren des Spaltsiebrohrs gesammeltes Schlammwasser in das Auffangbehältnis einbringbar und aus dem Auffangbehältnis, insbesondere durch den Abflussschlauch, ausbringbar sein.

Ein Durchmesser der ersten Öffnung kann einem Innendurchmesser des Spaltsiebrohrs entsprechen, wobei das Spaltsiebrohr an die erste Öffnung direkt angrenzt.

Bei einer bevorzugten Ausführungsform des Schlammwasserabzugs nach der Erfindung umfasst das Auffangbehältnis an seiner Oberseite mindestens eine Öffnung, insbesondere genau zwei, nämlich eine erste Öffnung und eine zweite Öffnung.

Durch die erste Öffnung kann in dem Inneren des Spaltsiebrohrs gesammeltes Schlammwasser, insbesondere direkt oder über ein Verbindungsrohr, in das Auffangbehältnis einbringbar sein.

Durch die zweite Öffnung ist beispielsweise das Schlammwasser mittels der Pumpe aus dem Auffangbehältnis durch den Abflussschlauch förderbar.

Der Abflussschlauch kann direkt an die zweite Öffnung angrenzen oder sich durch die zweite Öffnung erstrecken.

Die zweite Öffnung weist beispielsweise eine dem Innendurchmesser des Abflussrohrs entsprechenden Durchmesser auf, wobei das Abflussrohr an die zweite Öffnung direkt angrenzt.

Die Pumpe ist beispielsweise von dem Spaltsieb und/oder der (ersten) Öffnung des Auffangbehältnisses beabstandet.

Bei einer bevorzugten Ausführungsform des Schlammwasserabzugs nach der Erfindung ist das Abflussrohr an dem Auffangbehältnis, an dem Spaltsiebrohr und/oder an einer Wand eines Beckens fixierbar, in welchem der Schlammwasserabzug anordenbar ist.

Bei einer beispielhaften Ausführungsform umfasst der Schlammwasserabzug nach der Erfindung einen Füllstandsensor, insbesondere zur Detektion eines Füllstandes des Schlammwassers in dem Auffangbehältnis, welcher in dem Auffangbehälter angeordnet ist.

Der Füllstandsensor ist beispielsweise ein Drucksensor.

Mittels des Füllstandsensors sind bzw. ist ein Füllstand des Schlammwassers und/oder die Menge einer Feststoffablagerung in dem Auffangbehälter detektierbar.

Der Füllstandsensor kann an dem Auffangbehälter oder an der Pumpe fixiert sein.

Bei einer beispielhaften Ausführungsform umfasst der Schlammwasserabzug nach der Erfindung eine Verfahreinrichtung zum Anheben und/oder Absenken der Pumpe und/oder des Füllstandsensors.

Mittels der Verfahreinrichtung sind bzw. ist die Pumpe und/oder der Füllstandsensor beispielsweise durch das Spaltsiebrohr oder durch das Abflussrohr, insbesondere in vertikaler Richtung, bewegbar.

Die Pumpe und/oder der Füllstandsensor sind bzw. ist mittels der Verfahreinrichtung beispielsweise aus dem Spaltsiebrohr und/oder dem Abflussrohr in vertikaler Richtung oben entfernbar, insbesondere bis oberhalb eines Schlammspiegels verfahrbar, und/oder durch das Spaltsiebrohr und/oder das Abflussrohr bis unterhalb des Spaltsiebrohres und/oder des Abflussrohres, insbesondere in den Auffangbehälter, absenkbar.

Der Füllstandsensor und die Pumpe können gemeinsam, insbesondere, wenn der Füllstandsensor an der Pumpe fixiert ist, einen Querschnitt aufweisen der kleiner ist als ein Durchmesser des Spaltsiebohres und/oder des Abflussrohres.

Die Verfahreinrichtung kann ein mit der Pumpe und/oder mit dem Füllstandsensor verbundenes Seil, insbesondere ein Stahlseil, und einen Antrieb umfassen.

Das Seil ist beispielsweise mittels des Antriebs bewegbar.

Der Antrieb kann ein manueller Antrieb oder ein automatischer Antrieb sein.

Der Antrieb umfasst beispielsweise einen Galgen mit einer Kurbel.

Bei einer bevorzugten Ausführungsform des Schlammwasserabzugs nach der Erfindung bildet der Abflussschlauch das Seil der Verfahreinrichtung.

Die Pumpe und/oder der Füllstandsensor sind bzw. ist also beispielsweise derart mit dem Abflussschlauch verbunden, dass die Pumpe und/oder der Füllstandsensor mittels des Abflussschlauches, d.h. durch Bewegung des Abflussschlauches durch das Abflussrohr, insbesondere in vertikaler Richtung, bewegbar sind bzw. ist.

Die Pumpe kann auf einem Boden des Auffangbehältnisses stehen oder in dem Auffangbehältnis, insbesondere über den Abflussschlauch und/oder das Seil, insbesondere vom Boden des Auffangbehältnisses beabstandet, hängen.

Bei einer beispielhaften Ausführungsform umfasst der Schlammwasserabzug nach der Erfindung eine Stromversorgung für die Pumpe. Die Stromversorgung für die Pumpe erstreckt sich durch das Abflussrohr oder durch das Spaltsiebrohr.

Beispielsweise umfasst der Schlammwasserabzug nach der Erfindung eine Signalleitung für den Füllstandsensor, welche sich insbesondere durch das Abflussrohr oder das Spaltsiebrohr erstreckt.

Das Auffangbehältnis kann, insbesondere höhenverstellbare, Füße umfassen. Somit kann das Auffangbehältnis auf einfache Weise an verschiedene Untergründe, insbesondere Beckenböden, anpassbar sein.

Das Auffangbehältnis ist beispielsweise an einer Wand und/oder an einem Boden eines Beckens, in welchem der Schlammwasserabzug anordenbar ist, insbesondere mittels der Füße, fixierbar.

Das Spaltsiebrohr kann über ein Verbindungsrohr mit der Pumpe derart verbunden sein, dass in dem Spaltsiebrohr gewonnenes Schlammwasser durch die Ansaugöffnung in die Pumpe einströmt.

Das Abflussrohr grenzt beispielsweise an die Pumpe derart an, dass die Auslassöffnung umschlossen ist.

Die Pumpe kann in dem Abflussrohr angeordnet sein.

Das Verbindungsrohr kann das Spaltsiebrohr mit dem Abflussrohr verbinden.

Das Verbindungsrohr kann eine Biegung, insbesondere von 90°, aufweisen.

Bei einer beispielhaften Ausführungsform umfasst der Schlammwasserabzug nach der Erfindung eine Steuerungsvorrichtung zur Steuerung des Schlammwasserabzugs, insbesondere der Pumpe und/oder einer Rotation des Spaltsiebrohres.

Mittels der Steuerungsvorrichtung ist die Pumpe beispielsweise derart steuerbar, dass, wenn der mittels des Füllstandsensors erfasste Füllstand des Schlammwassers in dem Auffangbehältnis einen definierten Wert unterschreitet, die Pumpe ausgeschaltet wird, und bei Überschreiten des definierten Werts die Pumpe angeschaltet wird.

Bei einer beispielhaften Ausführungsform des Schlammwasserabzugs nach der Erfindung ist das Spaltsiebrohr mittels der Steuerungsvorrichtung derart steuerbar, dass, wenn der mittels des Füllstandsensors erfasste Füllstand des Schlammwassers in dem Auffangbehältnis einen definierten Wert unterschreitet, das Spaltsiebrohr zur Reinigung des Spaltsiebrohres von Feststoffen rotiert wird.

Des Weiteren betrifft die Erfindung ein Verfahren zur Steuerung des im Vorhergehenden beschriebenen Schlammwasserabzugs. Das Verfahren umfasst ein Einschalten der Pumpe mittels einer Steuervorrichtung zur Förderung von Schlammwasser durch den Abflussschlauch und ein Ausschalten der Pumpe mittels der Steuervorrichtung.

Bei einer beispielhaften Ausführungsform des Verfahrens nach der Erfindung wird die Pumpe eingeschaltet, wenn ein mittels des Füllstandsensors detektierter Füllstand des Schlammwassers in dem Auffangbehältnis einen definierten Wert überschreitet.

Bei einer bevorzugten Ausführungsform des Verfahrens nach der Erfindung wird die Pumpe ausgeschaltet, wenn ein mittels des Füllstandsensors detektierter Füllstand des Schlammwassers in dem Auffangbehältnis einen definierten Wert unterschreitet.

Bei einer beispielhaften Ausführungsform des Verfahrens nach der Erfindung wird die Pumpe während eines Befüllvorgangs des Beckens ausgeschaltet.

Bei einer bevorzugten Ausführungsform des Verfahrens nach der Erfindung wird die Pumpe zu einer, insbesondere von einem Nutzer, definierten Zeit eingeschaltet bzw. ausgeschalten.

Beispielsweise wird die Pumpe in Abhängigkeit, insbesondere von einem Nutzer, definierter Bedingungen in einem Anschlussbecken, in welches das gewonnene Schlammwasser geleitet wird, gesteuert, d.h. ein- und ausgeschalten.

Die definierten Bedingungen können eine Sauerstoffkonzentration des Schlammwassers in dem Anschlussbecken, eine Ammoniumkonzentration des Schlammwassers in dem Anschlussbecken und/oder einen Füllstand des Anschlussbeckens umfassen.

Bei einer beispielhaften Ausführungsform des Verfahrens nach der Erfindung wird das Spaltsiebrohr rotiert, wenn der mittels des Füllstandsensors erfasste Füllstand des Schlammwassers in dem Auffangbehältnis einen definierten Wert unterschreitet.

Im Folgenden ist die Erfindung anhand in der Zeichnung dargestellter Ausführungsbeispiele näher erläutert. Es zeigt:
- **Figur 1**: eine Schnittansicht durch einen ersten Schlammwasserabzug nach der Erfindung von der Seite;
- **Figur 2**: eine Figur 1 entsprechende Ansicht von vorne;
- **Figur 3**: eine Schnittansicht durch einen zweiten Schlammwasserabzug nach der Erfindung von der Seite;
- **Figur 4**: eine Figur 3 entsprechende Ansicht von vorne;
- **Figur 5**: eine Schnittansicht durch einen dritten Schlammwasserabzug nach der Erfindung von der Seite; und
- **Figur 6**: eine Schnittansicht durch einen vierten Schlammwasserabzug nach der Erfindung von der Seite; und
- **Figur 7**: eine Figur 6 entsprechende Ansicht von vorne.

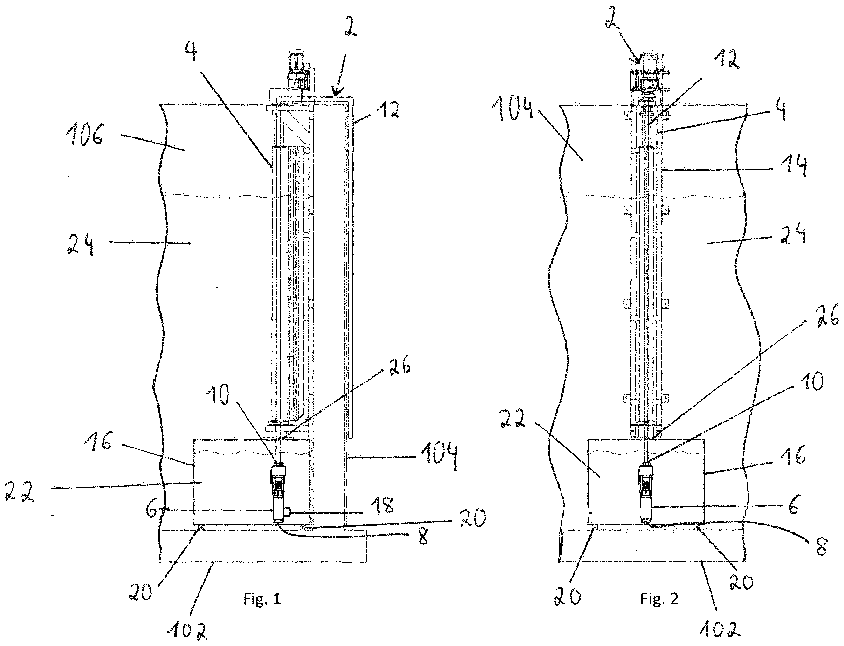

In den **Figuren 1** und **2** ist ein erster Schlammwasserabzug 2 nach der Erfindung dargestellt. Der erste Schlammwasserabzug 2 ist in einem Becken angeordnet, welches Seitenwände 104 und 106 und einen Beckenboden 102 umfasst. Das Becken ist mit Schlamm 24 befüllt.

Der Schlammwasserabzug 2 umfasst ein Spaltsiebrohr 4, ein Auffangbehältnis 16, eine Pumpe 6 und einen Abflussschlauch 12.

Das Spaltsiebrohr 4 umfasst, insbesondere über seine gesamte Hocherstreckung hinweg, Spalte, durch welche Schlammwasser 22 des Schlamms 24 in das Innere des Spaltsiebrohrs 4 fließt. Ein Querschnitt der Spalte verjüngt sich in Richtung des Inneren des Spaltsiebrohrs 4, also in radialer Richtung des Spaltsiebrohrs 4.

Das Spaltsiebrohr 4 weist die Form eines Hohlzylinders auf, der sich in vertikaler Richtung, d. h. in Becken-Hochrichtung, erstreckt. Über eine Befestigungsvorrichtung 14 ist das Spaltsiebrohr 4 an der Seitenwand 104 des Beckens fest befestigt.

An einem unteren Ende des Spaltsiebrohrs 4 grenzt ein Auffangbehältnis 16 an. Das Auffangbehältnis 16 umfasst genau eine Öffnung 26, durch welche mittels des Spaltsiebrohrs 4 gewonnenes Schlammwasser 22 in das Auffangbehältnis 16 fließt. Ansonsten ist das Auffangbehältnis 16 geschlossen ausgestaltet und trennt somit das gewonnene Schlammwasser 22 von dem Schlamm 24 in dem Becken räumlich ab.

In dem Auffangbehältnis 16 ist eine Pumpe 6 angeordnet. Die Pumpe 6 umfasst eine Ansaugöffnung 8 und eine Auslassöffnung 10. Durch die Ansaugöffnung 8 wird in dem Auffangbehältnis 16 gesammeltes Schlammwasser 22 in die Pumpe 6 eingezogen. Das eingezogene Schlammwasser 22 wird anschließend durch die Auslassöffnung 10 in den Abflussschlauch 12 befördert. Der Abflussschlauch 12 erstreckt sich durch die Öffnung 26 und das Spaltsiebrohr 4. Der Abflussschlauch 12 erstreckt sich also, wie das Spaltsiebrohr, in vertikaler Richtung und dient einer Beförderung des in dem Auffangbehältnis 16 gesammelten Schlammwassers 22 aus dem Becken.

In dem Auffangbehältnis 16 ist ein Füllstandsensor 18 angeordnet. Der Füllstandsensor 18 ist an der Pumpe 6, insbesondere seitlich, fixiert. Mittels des Füllstandsensors 18 ist ein Füllstand des Schlammwassers 22 in dem Auffangbehältnis 16 detektierbar. Auch kann mittels des Füllstandsensors 18 die Menge von sich in dem Auffangbehältnis 16 befindlichen, insbesondere abgesetzten, Feststoffen detektierbar sein.

Der Schlammwasserabzug 2 umfasst ferner eine (nicht dargestellte) Verfahreinrichtung. Mittels der Verfahreinrichtung ist die Pumpe 6 durch das Spaltsiebrohr 4 nach oben bewegbar und absenkbar. Auch der Füllstandsensor 18 ist mittels der Verfahreinrichtung durch das Spaltsiebrohr 4 bewegbar. Hierzu weist die Pumpe 6 und der an der Pumpe fixierte Füllstandsensor 18 in Summe einen Querschnitt auf, welcher kleiner ist als ein Innenrohrdurchmesser des Spaltsiebrohrs 4.

Das Auffangbehältnis 16 umfasst höhenverstellbare Füße 20. Über die höhenverstellbaren Füße 20 ist das Auffangbehältnis 16 an dem Beckenboden 102 fixiert.

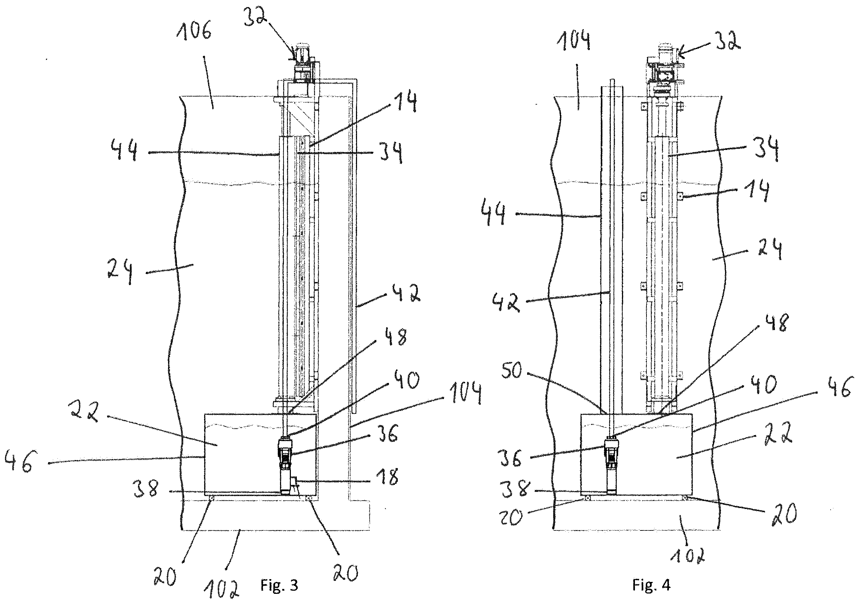

Die **Figuren 3** und **4** zeigen einen zweiten Schlammwasserabzug 32 nach der Erfindung. Der zweite Schlammwasserabzug 32 umfasst ein Spaltsiebrohr 34, eine Pumpe 36, einen Abflussschlauch 42, ein Abflussrohr 44 und ein Auffangbehältnis 26.

Die Ausgestaltung des Spaltsiebrohrs 34 entspricht der Ausgestaltung des Spaltsiebrohrs 4 des ersten Schlammwasserabzugs 32.

Das Auffangbehältnis 46 umfasst eine erste Öffnung 48 und eine von der ersten Öffnung 48 beabstandete zweite Öffnung 50.

Die erste Öffnung 48 entspricht der Öffnung 26 des ersten Schlammwasserabzugs 2. An die erste Öffnung 48 grenzt also das Spaltsiebrohr 36 direkt an, so dass mittels des Spaltsiebrohrs 34 gewonnenes Schlammwasser 22 durch die erste Öffnung 48 in das Auffangbehältnis 46 fließen kann.

An die zweite Öffnung 50 grenzt das Abflussrohr 44 an. Das Abflussrohr 44 erstreckt sich in vertikaler Richtung. Bei dem Abflussrohr 44 handelt es sich um einen beidseitig geöffneten Hohlzylinder.

Die Pumpe 36 zieht Schlammwasser 22 durch eine Ansaugöffnung 38 aus dem Auffangbehältnis 46 ein und befördert das eingezogene Schlammwasser 22 durch den an einer Auslassöffnung 40 der Pumpe 36 angeordneten Abflussschlauch 42. Der Abflussschlauch 42 erstreckt sich ausgehend von der Auslassöffnung 40 in vertikaler Richtung durch die zweite Öffnung 50 des Auffangbehältnisses 46 sowie durch das Abflussrohr 44.

Ferner umfasst der zweite Schlammwasserabzug 32 einen Füllstandsensor 18, welcher in seiner Ausgestaltung dem Füllstandsensor 18 des ersten Schlammwasserabzugs 2 entspricht.

Mittels einer (nicht dargestellten) Verfahreinrichtung ist die Pumpe 36 durch das Abflussrohr 44 anhebbar und in diesem absenkbar. Auch der Füllstandsensor 18 ist mittels der Verfahreinrichtung durch das Abflussrohr 44 anhebbar und absenkbar. Hierzu weist die Pumpe 6 und der an der Pumpe fixierte Füllstandsensor 18 in Summe einen Querschnitt auf, welcher kleiner ist als ein Innenrohrdurchmesser des Abflussrohrs 44.

Das Auffangbehältnis 46 ist über höhenverstellbare Füße 20 mit einem Beckenboden 102 eines Beckens verbunden.

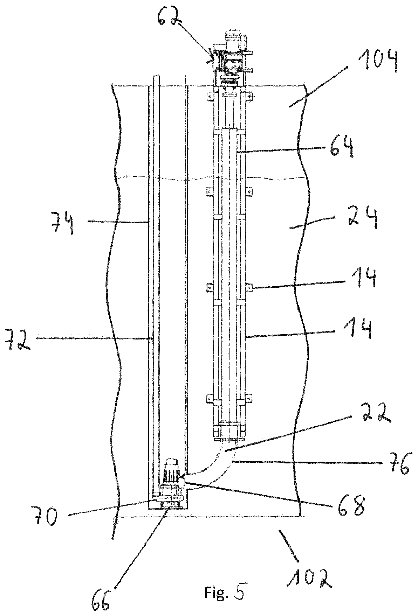

Die **Figur 5** zeigt eine Schnittansicht durch einen dritten Schlammwasserabzug 62 nach der Erfindung.

Der dritte Schlammwasserabzug 62 ist ebenfalls in einem Becken, umfassend einen Beckenboden 102 und Seitenwände 104 und 106, anordenbar. Das Becken ist mit Schlamm 24 befüllt.

Der dritte Schlammwasserabzug 62 umfasst ein Spaltsiebrohr 64, ein Verbindungsrohr 76, eine Pumpe 66, einen Abflussschlauch 72 und ein Abflussrohr 74.

Das Spaltsiebrohr 64 entspricht in seiner Ausgestaltung dem Spaltsiebrohr 4 des ersten Schlammwasserabzugs 2.

An ein in vertikaler Richtung unteres Ende des Spaltsiebrohrs 64 grenzt das Verbindungsrohr 76 direkt an. Das Verbindungsrohr 76 ist ein Hohlzylinder. Das Verbindungsrohr 76 weist eine Biegung, insbesondere von 90°, auf.

Mittels des Verbindungsrohrs 76 ist das Spaltsiebrohr 64 mit einer Ansaugöffnung 68 der Pumpe 66 verbunden. Mittels des Spaltsiebrohrs 64 gewonnenes Schlammwasser 22 kann somit in die Pumpe 66 fließen.

Die Pumpe 66 ist in einem unteren Endbereich des Abflussrohrs 74 angeordnet. Insbesondere steht die Pumpe 66 auf einem das Abflussrohr 74 unten verschließenden Boden.

Eine Auslassöffnung 70 der Pumpe 66 ist direkt mit dem Abflussschlauch 72 verbunden. Somit wird mittels der Pumpe 66 das gewonnene Schlammwasser 22 durch den Abflussschlauch 72 nach oben befördert.

Der in dem Abflussrohr 74 angeordnete Abflussschlauch 72 erstreckt sich, wie auch das Abflussrohr 74, in vertikaler Richtung.

Das Spaltsiebrohr 64 ist mittels einer Befestigungsvorrichtung 14 an der Seitenwand 104 des Beckens fixiert.

Zur Reinigung, Montage und/oder Wartung ist die Pumpe 66 durch das Abflussrohr 74 mittels einer (nicht dargestellten) Verfahreinrichtung in vertikaler Richtung bewegbar, d. h. absenkbar und anhebbar. Hierzu weist die Pumpe 6 einen Querschnitt auf, welcher kleiner ist als ein Innenrohrdurchmesser des Abflussrohrs 74.

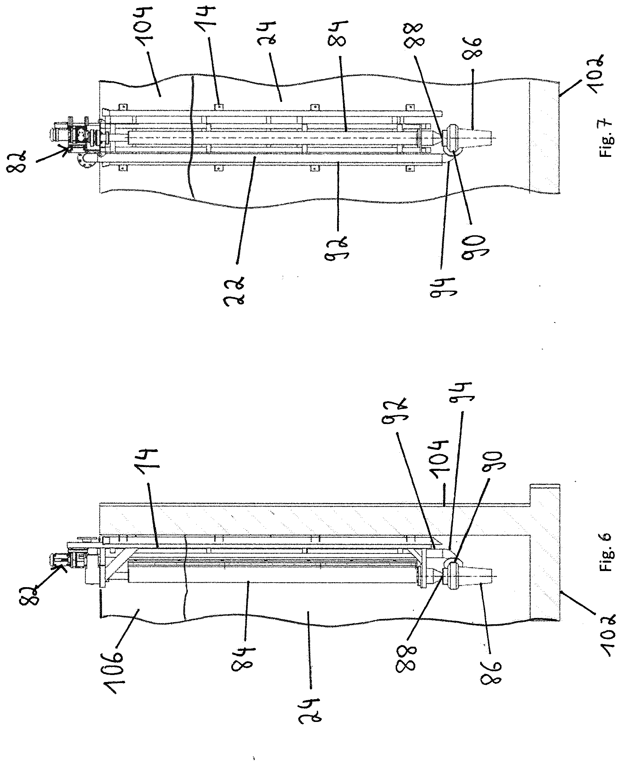

Die **Figuren 6 und 7** zeigen jeweils eine Schnittansicht durch einen vierten Schlammwasserabzug 82 nach der Erfindung.

Auch der vierte Schlammwasserabzug 82 ist in einem Becken, umfassend einen Beckenboden 102 und Seitenwände 104 und 106, anordenbar. Das Becken ist mit Schlamm 24 befüllt.

Der vierte Schlammwasserabzug 82 weist ein Spaltsiebrohr 84, eine Pumpe 86 und einen Abflussschlauch 92 auf. Das Spaltsiebrohr 84 entspricht in seiner Ausgestaltung dem Spaltsiebrohr 4 des ersten Schlammwasserabzugs 2.

An ein in vertikaler Richtung unteres Ende des Spaltsiebrohrs 84 grenzt die Pumpe 86 direkt an. Ein unteres Ende des Spaltsiebrohres liegt also an einer Ansaugöffnung 88 der Pumpe 86 an. Mittels des Spaltsiebrohrs 84 gewonnenes Schlammwasser 22 kann somit direkt in die Pumpe 86 fließen.

Eine Auslassöffnung 90 der Pumpe 86 ist wiederum direkt mit dem Abflussschlauch 92 verbunden, so dass mittels der Pumpe 86 gewonnene Schlammwasser 22 durch den Abflussschlauch 92 nach oben befördert wird.

Der Abflussschlauch 92 weist an seinem in vertikaler Richtung unteren Ende einen gebogenen Bereich 94 auf, an welchen ein sich in vertikaler Richtung erstreckender Bereich angrenzt.

Das Spaltsiebrohr 84 ist mittels einer Befestigungsvorrichtung 14 an der Seitenwand 104 des Beckens fixiert.

### Bezugszeichenliste

- 2: Schlammwasserabzug
- 4: Spaltsiebrohr
- 6: Pumpe
- 8: Ansaugöffnung
- 10: Auslassöffnung
- 12: Abflussschlauch
- 14: Befestigungsvorrichtung
- 16: Auffangbehältnis
- 18: Füllstandsensor
- 20: Füße
- 22: Schlammwasser
- 24: Schlamm
- 26: Öffnung
- 32: Schlammwasserabzug
- 34: Spaltsiebrohr
- 36: Pumpe
- 38: Ansaugöffnung
- 40: Auslassöffnung
- 42: Abflussschlauch
- 44: Abflussrohr
- 46: Auffangbehältnis
- 48: erste Öffnung
- 50: zweite Öffnung
- 62: Schlammwasserabzug
- 64: Spaltsiebrohr
- 66: Pumpe
- 68: Ansaugöffnung
- 70: Auslassöffnung
- 72: Abflussschlauch
- 74: Abflussrohr
- 76: Verbindungsrohr
- 82: Schlammwasserabzug
- 84: Spaltsiebrohr
- 86: Pumpe
- 88: Ansaugöffnung
- 90: Auslassöffnung
- 92: Abflussschlauch
- 94: gebogener Bereich
- 102: Beckenboden
- 104: Seitenwand
- 106: Seitenwand

## Patentansprüche

1. Schlammwasserabzug, umfassend ein Spaltsiebrohr (4, 34, 64, 84) zur Gewinnung von Schlammwasser aus Schlamm, eine Pumpe (6, 36, 66, 86) und einen Abflussschlauch (12, 42, 62, 92), wobei mittels der Pumpe (6, 36, 66, 86) gewonnenes Schlammwasser (22) durch den Abflussschlauch (12, 42, 72, 92) förderbar ist.

2. Schlammwasserabzug nach Anspruch 1, **dadurch gekennzeichnet, dass** die Pumpe (6, 36, 66, 86) eine Ansaugöffnung (8, 38, 68, 88), durch die mittels des Spaltsiebrohres (4, 34, 64, 84) gewonnenes Schlammwasser (22) in die Pumpe (6, 36, 66, 86) einsaugbar ist, und die Auslassöffnung (10, 40, 60, 90) umfasst, die mit dem Abflussschlauch (12, 42, 72, 92) derart verbunden ist, dass das gewonnene Schlammwasser (22) durch den Abflussschlauch (12, 42, 72, 92) beförderbar ist.

3. Schlammwasserabzug nach Anspruch 2, **dadurch gekennzeichnet, dass** die Ansaugöffnung (8, 38, 68, 88) direkt oder über ein Verbindungsrohr (76) mit dem Spaltsieb-rohr (4, 34, 64, 84) verbunden ist.

4. Schlammwasserabzug nach Anspruch 2 oder 3, **gekennzeichnet durch** ein Auffangbehältnis (16, 46), in welchem die Pumpe (6, 36, 66, 86) angeordnet ist und welches an seiner Oberseite mindestens eine Öffnung (26, 48, 50) umfasst, durch welche das gesammelte Schlammwasser (22) in das Auffangbehältnis (16, 46) einbringbar und/oder mittels der Pumpe (6, 36, 66, 86) aus dem Auffangbehältnis (16, 46) durch den Abflussschlauch (12, 42, 72, 92) förderbar ist.

5. Schlammwasserabzug nach Anspruch 4, **dadurch gekennzeichnet, dass** das Auffangbehältnis (46) eine erste Öffnung (48) und eine zweite Öffnung (50) umfasst, wobei durch die erste Öffnung (48) das gesammelte Schlammwasser (22) in das Auffangbehältnis (46) einbringbar ist und/oder durch die zweite Öffnung (50) das Schlammwasser (22) aus dem Auffangbehältnis (46) durch den Abflussschlauch (42) ausbringbar ist.

6. Schlammwasserabzug nach einem der Ansprüche 1 bis 5, **gekennzeichnet durch** ein Abflussrohr (24, 44, 74), durch welches sich der Abflussschlauch (12, 42, 72, 92) erstreckt.

7. Schlammwasserabzug nach Anspruch 6, **dadurch gekennzeichnet, dass** das Abflussrohr (24, 44, 74) mindestens eine dem Spaltsiebrohr (4, 34, 64, 84) entsprechende Länge aufweist, dass sich das Abflussrohr (24, 44, 74) parallel zu dem Spaltsiebrohr (4, 34, 64, 84) erstreckt und/oder dass sich das Abflussrohr (24, 44, 74) vertikal erstreckt.

8. Schlammwasserabzug nach einem der Ansprüche 1 bis 7, **gekennzeichnet durch** einen Füllstandsensor (18), welcher in dem Auffangbehälter (16, 46) angeordnet ist.

9. Schlammwasserabzug nach einem der Ansprüche 1 bis 8, **dadurch gekennzeichnet, dass** die Pumpe (6, 36, 66, 86), der Füllstandsensor (18) und/oder der die Pumpe (6, 36, 66, 86) und der Füllstandsensor (18) gemeinsam durch das Spaltsiebrohr (4, 34, 64, 84) und/oder das Abflussrohr (24, 44, 74) hindurchführbar sind bzw. ist.

10. Schlammwasserabzug nach einem der Ansprüche 1 bis 9, **gekennzeichnet durch** mindestens eine Verfahreinrichtung, mittels welcher die Pumpe (6, 36, 66, 86), der Füllstandsensor (18) und/oder die Pumpe (6, 36, 66, 86) und der Füllstandsensor (18) gemeinsam durch das Spaltsiebrohr (4, 34, 64, 84) oder durch das Abflussrohr (24, 44, 74) bewegbar sind bzw. ist.

11. Schlammwasserabzug nach einem der Ansprüche 1 bis 10, **gekennzeichnet durch** eine Reinigungsbürste (20), die zur Reinigung des Spaltsiebrohres (4, 34, 64, 84) an der Außenfläche des Spaltsiebrohres (4, 34, 64, 84) anliegt.

12. Schlammwasserabzug nach einem der Ansprüche 1 bis 11, **dadurch gekennzeichnet, dass** mittels der Pumpe (6, 36, 66, 86) gewonnenes Schlammwasser (22) durch den Abflussschlauch (12, 42, 72, 92) in vertikaler Richtung nach oben förderbar ist.

13. Schlammwasserabzug nach einem der Ansprüche 1 bis 12, **dadurch gekennzeichnet, dass** das Spaltsiebrohrs (4, 34, 64, 84) um eine Spaltsiebrohr-Längsmittelachse rotierbar ist.

14. Verfahren zur Steuerung des Schlammwasserabzugs (2, 32, 62) nach einem der Ansprüche 1 bis 12, umfassend ein Einschalten der Pumpe (6, 36, 66, 86) zur Förderung von Schlammwasser (22) durch den Abflussschlauch (12, 42, 62, 92), und ein Ausschalten der Pumpe (6, 36, 66, 86).

15. Verfahren nach Anspruch 13, **dadurch gekennzeichnet, dass** die Pumpe (6, 36, 66, 86) ausgeschaltet wird, wenn ein mittels des Füllstandsensors (18) detektierter Füllstand des Schlammwassers (22) in dem Auffangbehältnis (16, 46) einen definierten Wert unterschreitet.
